# EUROPÄISCHE PATENTANMELDUNG

(11) **EP 1 256 790 A2**
(43) Veröffentlichungstag der Anmeldung: **13.11.2002**
(21) Anmeldenummer: 02009875.2
(22) Anmeldetag: 02.05.2002
(51) Int. Cl.: G01M 1/20

(54) **Verfahren zum Wuchten von Rotoren**

(30) Priorität: 08.05.2001 DE 10122135
(71) Anmelder: Voith Paper Patent GmbH, 89522 Heidenheim (DE)
(72) Erfinder: Wolf, Robert, 89542 Herbrechtingen (DE); Scheideler, Eva, Dr., 89564 Nattheim (DE); Kugler, Georg, 89547 Gerstetten (DE)

(57) **Zusammenfassung**

Es wird ein Verfahren zum gleichzeitigen Wuchten mechanisch gekoppelter, verschiedene Drehachsen aufweisender synchron drehender Rotoren, insbesondere Zylinder und/oder Walzen einer Papiermaschine, beschrieben, bei dem
die zu wuchtende Rotorgruppe in jeder Lagerebene und/oder in wenigstens einer anderen, die Rotorschwingungen signifikant beschreibenden Meßebene mit jeweils wenigstens einem Schwingungsaufnehmer bestückt wird,
in der zu wuchtenden Rotorgruppe so viele Drehzahl- und Phasengeber, z.B. Trigger, installiert werden, wie unterschiedliche Winkelgeschwindigkeiten der Rotoren vorgesehen sind,
bezüglich einer jeweiligen Meßebene gleichzeitig zumindest die zugehörigen Schwingungssignale und das zugehörige Drehzahlsignal erfaßt werden und
unter Anwendung der Einflußkoeffizientenmethode durch Setzen definierter Testunwuchten die Einflußzahlen jeder Testwuchtebene zu jeder Meßebene bestimmt werden, wenigstens eine entsprechende Einflußzahlenmatrix erstellt wird und aus der erstellten Einflußzahlenmatrix für jede Wuchtebene der Rotorgruppe die Ausgleichsmassenverteilung bestimmt wird,
wobei vorzugsweise die Lage zumindest einer Testwuchtebene verschieden von der wenigstens einen Betriebwuchtebene gewählt wird.

## Beschreibung

Die Erfindung betrifft ein Verfahren zum gleichzeitigen Wuchten mechanisch gekoppelter, verschiedene Drehachsen aufweisender synchron drehender Rotoren, insbesondere Zylinder und/oder Walzen einer Papiermaschine.

Bisher werden Zylindergruppen, bei denen synchron drehende Zylinder von nur einem Antrieb über ein Verteilergetriebe angetrieben werden, gewuchtet, indem Teile des Verteilergetriebes entfernt werden und dann jeder Zylinder einzeln über einen Hilfsantrieb angetrieben und gewuchtet wird.

Ein solches Vorgehen ist sehr zeitintensiv und teilweise mit mechanischen Risiken verbunden, da jahrelang im Betrieb eingelaufene Verbindungen getrennt werden müssen.

Es gibt bereits theoretische und praktische Untersuchungen an einem stark vereinfachten Labor-Versuch mit zwei synchron drehenden Zylindern, diese im gekoppelten Zustand zu wuchten (Dissertation von H. Wilhelm, Fortschritt-Berichte VDI, Reihe 11, "Betriebswuchten gekoppelter Rotoren"; H. Wilhelm, H. P. Wölfel, "Betriebswuchten von Walzen in Papiermaschinen; Das Papier 6/1997, Seiten 297 bis 302). Diese Untersuchungen wurden unter stark eingeschränkten Bedingungen durchgeführt.

Ziel der Erfindung ist es, ein verbessertes Verfahren der eingangs genannten Art anzugeben, mit dem gekoppelte Rotoren, die keine gemeinsame Drehachse haben (wie z.B. Turbosätze), im betriebsbereiten Zustand praxisnah gewuchtet werden können. Dabei soll ein Wuchten in möglichst kurzer Zeit, d.h. mit erhöhter Wirtschaftlichkeit und ohne mechanisches Risiko, möglich sein. Das Verfahren soll insbesondere für Trockenzylinder, Leitwalzen, Kalanderwalzen und/oder dergleichen anwendbar sein.

Erfindungsgemäß wird diese Aufgabe gelöst durch ein Verfahren zum gleichzeitigen Wuchten mechanisch gekoppelter, verschiedene Drehachsen aufweisender synchron drehender Rotoren, insbesondere Zylinder und/oder Walzen einer Papiermaschine, bei dem die zu wuchtende Rotorgruppe in jeder Lagerebene und/oder in wenigstens einer anderen, die Rotorschwingungen signifikant beschreibenden Meßebene mit jeweils wenigstens einem Schwingungsaufnehmer bestückt wird, in der zu wuchtenden Rotorgruppe so viele Drehzahl- und Phasengeber installiert werden, wie unterschiedliche Winkelgeschwindigkeiten der Rotoren vorgesehen sind, bezüglich einer jeweiligen Meßebene gleichzeitig zumindest die zugehörigen Schwingungssignale und das zugehörige Drehzahlsignal erfaßt werden und unter Anwendung der Einflußkoeffizientenmethode durch Setzen definierter Testunwuchten die Einflußzahlen jeder Testwuchtebene zu jeder Meßebene bestimmt werden, wenigstens eine entsprechende Einflußzahlenmatrix erstellt wird und aus der erstellten Einflußzahlenmatrix für jede Wuchtebene der Rotorgruppe die Ausgleichsmassenverteilung bestimmt wird, wobei vorzugsweise die Lage zumindest einer Testwuchtebene verschieden von der wenigstens einen Betriebwuchtebene gewählt wird.

Aufgrund dieser Ausgestaltung ergeben sich u.a. die folgenden Vorteile:
1) Das Wuchten einer Rotorgruppe im gekoppelten Zustand unter Benutzung von leicht zugänglichen Testwuchtebenen ist bedeutend schneller als das sukzessive Einzelwuchten der Rotoren oder das gekoppelte Wuchten, wobei Testwuchtebenen und Betriebswuchtebenen übereinstimmen.
2) Mechanische Risiken, die durch die Entkopplung von Rotoren entstehen, werden gänzlich vermieden. Mögliche mechanische Risiken sind z.B. eine Zerstörung oder Beschädigung von beispielsweise Zahnrädern beim Ausbau, Leckage des Räderkastens nach dem Wiederzusammenbau, abgerissene Schraubenverbindungen, und/oder dergleichen. Derartige mechanische Risiken werden mit dem erfindungsgemäßen Verfahren vermieden.

In der eingangs genannten Dissertation von H. Wilhelm, Fortschritt-Berichte VDI, Reihe 11, "Betriebswuchten gekoppelter Rotoren", wurde zwar bereits das Wuchten mit Einflußzahlen für gekoppelte Rotoren in einem Labor-Versuchsstand untersucht. Dies geschah allerdings mit den Einschränkungen, daß die Lage der Betriebswuchtebenen und die bei den Testwuchtfahrten benötigten Testwuchtebenen identisch waren, und daß für die Gruppe der zu wuchtenden Zylinder alle in der Gruppe befindlichen Rotoren mit synchroner Drehzahl betrieben wurden. Eine Kombination von elastischen und/oder starren Rotoren in einer zu wuchtenden Rotorgruppe war ebensowenig Gegenstand der Dissertation.

Als weiterer Unterschied ist hervorzuheben, daß es im Zusammenhang mit dem erfindungsgemäßen Verfahren nicht notwendig ist, unbedingt an den Lagerstellen zu messen, und daß es nicht erforderlich ist, an allen Meßebenen die Schwingungen jeweils in gleicher Richtung zu messen. Diese sind für die Praxis wichtige Aspekte, da nicht immer an allen Lagerebenen ein ungehinderter Zugang möglich ist (vgl. z.B. Nipco-Walzen in Kalandern) und auch nicht immer gewährleistet ist, daß an allen entscheidenden Meßebenen jeweils in gleicher Richtung die Schwingungen gemessen werden können.

Es ist also nicht mehr erforderlich, daß die Lage der Betriebswuchtebenen (Ebenen, in denen später für den Dauerbetrieb dies Ausgleichsmassen eingebaut werden) mit der Lage der Testwuchtebenen (Ebenen, in denen nur während des Wuchtvorgangs die Testwuchtgewichte eingebaut werden) übereinstimmt. Es ist vielmehr von Vorteil, für die Ermittlung der Einflußzahlenmatrix Ebenen für die Testwuchtgewichte zu wählen, die leicht zugänglich sind und wo in kürzester Zeit die Testwuchtgewichte anund abmontiert werden können. Die mit Hilfe der Einflußzahlenmatrix ermittelten Ausgleichsgewichte können über die betreffenden mathematischen Beziehungen auf die Betriebswuchtebenen umgerechnet werden.

Mittels der Schwingungsaufnehmer können Rotorschwingungen in einer oder mehreren vorgebbaren Richtungen aufgenommen werden.

Als Drehzahl- und Phasengeber können beispielsweise Trigger und/oder dergleichen eingesetzt werden.

Bei den Rotoren kann es sich beispielsweise um Trockenzylinder, Leitwalzen, Kalanderwalzen und/oder dergleichen handeln.

Es ist beispielsweise möglich, wenigstens eine Testwuchtebene im Bereich eines Gewindes einer einem Zylinderdeckel zugeordneten Abdrückschraube zu wählen. Wie bereits erwähnt müssen die Betriebswuchtebenen nicht mehr mit den Testwuchtebenen übereinstimmen.

Das Wuchten kann bei einer beliebig festgelegten Rotordrehzahl durchgeführt werden. Insbesondere für elastische Rotoren ist es von Vorteil, wenn die Betriebswuchtung im Hauptbetriebsdrehzahlbereich vorgenommen wird.

In dem Fall, daß die zu wuchtende Rotorgruppe nicht ausschließlich aus starren Rotoren besteht, sondern auch, oder nur aus elastischen Rotoren, ist entsprechend der zu wuchtenden Eigenformen die Anzahl von Wuchtebenen pro Rotor zu erhöhen. Es werden dann vorzugsweise gleichzeitig mehrere Einflußzahlenmatrizen bei unterschiedlichen vorgebbaren Winkelgeschwindigkeiten ermittelt. Soweit erforderlich, wird dann durch numerische Mittelung eine Ausgleichsmassenverteilung berechnet, bei der die Schwingungen in den Meßebenen für die gewählten Winkelgeschwindigkeitsbereiche minimiert sind.

Da in fast allen zu wuchtenden Rotorgruppen auch Rotoren vorhanden sind, deren Winkelgeschwindigkeit sich von der Winkelgeschwindigkeit der zu wuchtenden Rotoren unterscheidet und bei denen die natürlich vorhandenen Restunwuchten in keiner festen Phasenlage zu den zu wuchtenden Rotoren stehen, ist eine geeignete Schwingungssignalbearbeitung erforderlich, um die betreffenden Störeinflüsse zu eliminieren. Dazu erfolgt vorzugsweise eine Schwingungssignalbearbeitung, bei der aus den aufgezeichneten Zeitsignalen mittels Fourier-Transformationen die komplexen drehfrequenten Schwingungsanteile ermittelt werden, dieser Schritt mehrmals wiederholt wird, anschließend eine Mittelung der ermittelten komplexen Schwingungsanteile durchgeführt wird und aus den gemittelten komplexen Schwingungsanteilen die Einflußzahlenmatrix ermittelt wird.

Die Erfindung wird im folgenden anhand von Ausführungsbeispielen unter Bezugnahme auf die Zeichnung nähert erläutert; in dieser zeigen:
- Figur 1: eine schematische Darstellung zweier Rotorgruppen mit jeweils wenigstens zwei synchron drehenden Rotoren,
- Figur 2: eine schematische Darstellung einer Gruppe synchron drehender Rotoren, denen Schwingungsaufnehmer zugeordnet sind, die in der betreffenden Lagerebene oder auch außerhalb der Lagerebene angeordnet sein können, und
- Figur 3: unterschiedliche, mögliche Anordnungen von Testwuchtebenen und Betriebswuchtebenen.

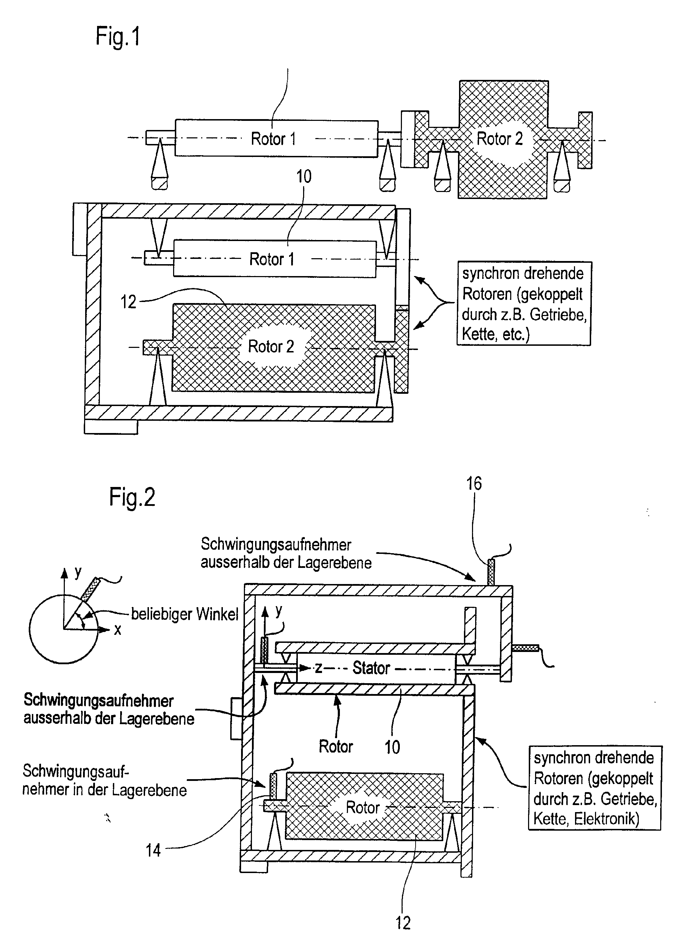

Figur 1 zeigt in schematischer Darstellung zwei Rotorgruppen mit jeweils wenigstens zwei synchron drehenden Rotoren 10, 12, die im einen Fall in einer Ebene, und im anderen Fall in unterschiedlichen Ebenen angeordnet sind. Die Rotoren 10, 12 einer jeweiligen Rotorgruppe können insbesondere mechanisch, z.B. durch Getriebe, Kette, usw., gekoppelt sein.

Figur 2 zeigt in schematischer Darstellung eine Gruppe synchron drehender Rotoren 10, 12, denen Schwingungsaufnehmer 14, 16 zugeordnet sind, die in der betreffenden Lagerebene (vgl. den Schwingungsaufnehmer 14) oder auch außerhalb der betreffenden Lagerebene (vgl. den Schwingungsaufnehmer 16) angeordnet sein können.

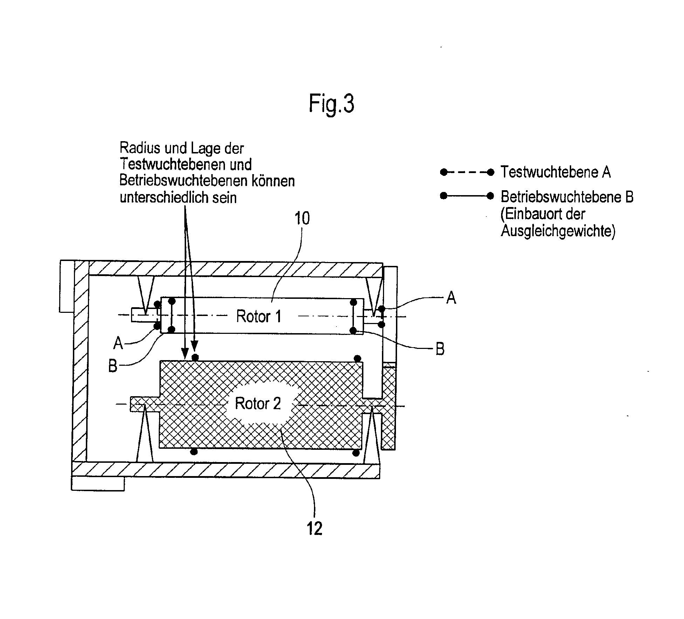

Figur 3 zeigt beispielhaft unterschiedliche, mögliche Anordnungen von Testwuchtebenen und Betriebswuchtebenen.

Eine beispielhafte Ausgestaltung des erfindungsgemäßen Verfahrens besteht darin, die Methode des Wuchtens mit Einflußgrößen, die in der Literatur bekannt ist, für die Wuchtung von elastischen bzw. starren Rotoren mit einer gemeinsamen Drehachse auf das gleichzeitige Wuchten von mehreren Rotoren 10, 12 (vgl. z.B. Figur 1) auszudehnen, die über die Rotorabstützungen und Lagerung mechanisch miteinander gekoppelt sind (und in deren Gruppe mehrere Rotoren mit gleicher Drehzahl laufen). Der Drehsinn der Rotoren 10, 12 kann unterschiedlich sein.

Dazu wird die zu wuchtende Rotorgruppe in jeder Lagerebene oder auch in anderen, die Rotorschwingungen signifkant beschreibenden Meßebenen mit mindestens einem Schwingungsaufnehmer 14, 16 (vgl. insbesondere die Figuren 2 und 3) in einer oder mehreren festzulegenden Richtungen bestückt. In der Rotorgruppe sind so viele Drehzahl- und Phasengeber (z.B. Trigger und/oder dergleichen) zu installieren, wie unterschiedliche Winkelgeschwindigkeiten der Rotoren vorhanden sind. Gleichzeitig müssen zumindest die Schwingungssignale von einer Meßebene und das zu dieser Meßebene gehörende Drehzahlsignal erfaßt werden.

Die Methode "Wuchten mit Einflußkoeffizienten" sieht vor, daß durch Setzen von definierten Testunwuchten (Betrag und Phasenlage der Testunwucht bekannt) die Einflußzahlen von jeder einzelnen Testwuchtebene zu jeder Meßebene bestimmt wird. Ist der Grundschwingungszustand der Rotorgruppe für jede Meßebene bekannt (d.h. die Amplitude und die Phase des drehfrequenten Schwingungsanteils), und sind die Schwingungszustände für die unterschiedlichen definiert gesetzten Testunwuchten bekannt, so kann eine Einflußzahlenmatrix ermittelt werden, aus der die Ausgleichsmassenverteilung für die Rotorgruppe für jede Wuchtebene errechnet werden kann.

Es ist nicht erforderlich, daß die Lage der Betriebswuchtebenen (die Ebenen, in denen später für den Dauerbetrieb die Ausgleichsmassen eingebaut werden) mit der Lage der Testwuchtebenen (Ebenen, in denen nur während des Wuchtvorgangs die Testwuchtgewichte eingebaut werden) übereinstimmt (vgl. insbesondere Figur 3). Es ist vielmehr von Vorteil, für die Ermittlung der Einflußzahlenmatrix Ebenen für die Testwuchtgewichte zu wählen, die leicht zugänglich sind und wo in kürzester Zeit die Testwuchtgewichte an- und abmontiert werden können. So ist beispielsweise eine Benutzung der Gewinde der Abdrückschrauben am Zylinderdeckel denkbar. Über mathematische Beziehungen können die mit Hilfe der Einflußzahlenmatrix ermittelten Ausgleichsgewichte auf die Betriebswuchtebenen umgerechnet werden. Die angegebene Wuchtmethode kann bei einer beliebig festgelegten Rotordrehzahl durchgeführt werden. Optimal ist die Betriebwuchtung im Hauptbetriebsdrehzahlbereich, was insbesondere für elastische Rotoren gilt.

Besteht die zu wuchtende Rotorgruppe nicht ausschließlich aus starren Rotoren, sondern auch oder nur aus elastischen Rotoren, so kann entsprechend der zu wuchtenden Eigenformen die Anzahl der Wuchtebenen pro Rotor erhöht werden. Gleichzeitig wird dann nicht nur eine Einflußzahlenmatrix ermittelt, sondern es werden vorzugsweise mehrere Einflußzahlenmatrizen bei unterschiedlichen, zuvor definierten Winkelgeschwindigkeiten ermittelt, und es wird, falls erforderlich, durch numerische Mittelungen eine Ausgleichsmassenverteilung berechnet, bei der die Schwingungen in den Meßebenen für die gewählten Winkelgeschwindigkeitsbereiche minimiert sind.

Da in fast allen zu wuchtenden Rotorgruppen auch Rotoren vorhanden sind, deren Winkelgeschwindigkeit sich von der Winkelgeschwindigkeit der zu wuchtenden Rotoren unterscheidet und bei denen die natürlich vorhandenen Restunwuchten in keiner festen Phasenlage zu den zu wuchtenden Rotoren stehen, ist eine geeignete Schwingungssignalbearbeitung zweckmäßig, um die betreffenden Störeinflüsse zu eliminieren.

Dazu können aus den aufgezeichneten Zeitsignalen mittels Fourier-Transformationen die komplexen drehfrequenten Schwingungsanteile (also Phase und Betrag des Schwingungsanteils, dessen Frequenz mit der Winkelgeschwindigkeit des zugehörigen Rotors übereinstimmt) ermittelt werden. Dieses wird mehrere Male (z.B. 20mal) hintereinander durchgeführt, und anschließend wird eine Mittelung dieser ermittelten komplexen Schwingungsanteile durchgeführt (Mittelung des drehfrequenten Schwingungssignals im Frequenzbereich). Aus den gemittelten komplexen Schwingungsanteilen wird die Einflußzahlenmatrix ermittelt.

Wie bereits erwähnt, zeigt die Figur 3 rein beispielhaft, unterschiedliche, mögliche Anordnungen von Testwuchtebenen und Betriebswuchtebenen. Beim angegebenen Verfahren müssen nicht alle möglichen Varianten gleichzeitig ausgeführt sein. Wesentlich ist jedoch, daß die Betriebswuchtebenen nicht gleich der Testwuchtebenen sein müssen.

Wie der Figur 3 entnommen werden kann, können nicht nur die Lage, sondern auch der Radius der Testwuchtebenen und Betriebswuchtebenen unterschiedlich sein.

In der Figur 3 sind bestimmte Testwuchtebenen mit "A" und bestimmte Betriebswuchtebenen mit "B" bezeichnet.

### Bezugszeichenliste

- 10: Rotor
- 12: Rotor
- 14: Schwingungsaufnehmer
- 16: Schwingungsaufnehmer

- A: Testwuchtebene
- B: Betriebswuchtebene

## Patentansprüche

1. Verfahren zum gleichzeitigen Wuchten mechanisch gekoppelter, verschiedene Drehachsen aufweisender synchron drehender Rotoren (10, 12), insbesondere Zylinder und/oder Walzen einer Papiermaschine, bei dem die zu wuchtende Rotorgruppe in jeder Lagerebene und/oder in wenigstens einer anderen, die Rotorschwingungen signifikant beschreibenden Meßebene mit jeweils wenigstens einem Schwingungsaufnehmer (14, 16) bestückt wird, in der zu wuchtenden Rotorgruppe so viele Drehzahl- und Phasengeber installiert werden, wie unterschiedliche Winkelgeschwindigkeiten der Rotoren (10, 12) vorgesehen sind, bezüglich einer jeweiligen Meßebene gleichzeitig zumindest die zugehörigen Schwingungssignale und das zugehörige Drehzahlsignal erfaßt werden und unter Anwendung der Einflußkoeffizientenmethode durch Setzen definierter Testunwuchten die Einflußzahlen jeder Testwuchtebene zu jeder Meßebene bestimmt werden, wenigstens eine entsprechende Einflußzahlenmatrix erstellt wird und aus der erstellten Einflußzahlenmatrix für jede Wuchtebene der Rotorgruppe die Ausgleichsmassenverteilung bestimmt wird, wobei vorzugsweise die Lage zumindest einer Testwuchtebene verschieden von der wenigstens einen Betriebwuchtebene gewählt wird.

2. Verfahren nach Anspruch 1,
**dadurch gekennzeichnet,**
**daß** mittels der Schwingungsaufnehmer (14, 16) Rotorschwingungen in einer oder mehreren vorgebbaren Richtungen aufgenommen werden.

3. Verfahren nach Anspruch 1 oder 2,
**dadurch gekennzeichnet,**
**daß** als Drehzahl- und/oder Phasengeber Trigger und/oder dergleichen eingesetzt werden.

4. Verfahren nach einem der vorhergehenden Ansprüche,
**dadurch gekennzeichnet,**
**daß** die Rotoren (10, 12) durch Trockenzylinder, Leitwalzen, Kalanderwalzen und/oder dergleichen gebildet sind.

5. Verfahren nach einem der vorhergehenden Ansprüche,
**dadurch gekennzeichnet,**
**daß** wenigstens eine Testwuchtebene im Bereich eines Gewindes einer einem Zylinderdeckel zugeordneten Abdrückschraube liegt.

6. Verfahren nach einem der vorhergehenden Ansprüche,
**dadurch gekennzeichnet,**
**daß** die Betriebswuchtung im Hauptbetriebsdrehzahlbereich vorgenommen wird.

7. Verfahren nach einem der vorhergehenden Ansprüche,
**dadurch gekennzeichnet,**
**daß** gleichzeitig mehrere Einflußzahlenmatrizen bei unterschiedlichen vorgebbaren Winkelgeschwindigkeiten ermittelt werden.

8. Verfahren nach Anspruch 7,
**dadurch gekennzeichnet,**
**daß** durch numerische Mittelung eine Ausgleichsmassenverteilung berechnet wird, bei der die Schwingungen in den Meßebenen für die gewählten Winkelgeschwindigkeitsbereiche minimiert sind.

9. Verfahren nach einem der vorhergehenden Ansprüche,
**dadurch gekennzeichnet,**
**daß** eine Schwingungssignalbearbeitung erfolgt, bei der aus den aufgezeichneten Zeitsignalen mittels Fourier-Transformationen die komplexen drehfrequenten Schwingungsanteile ermittelt werden, daß dieser Schritt mehrmals wiederholt wird, daß anschließend eine Mittelung der ermittelten komplexen Schwingungsanteile durchgeführt wird und daß aus den gemittelten komplexen Schwingungsanteilen die Einflußzahlenmatrix ermittelt wird.
